# EUROPÄISCHE PATENTSCHRIFT

(11) **EP 1 802 396 B1**
(45) Veröffentlichungstag und Bekanntmachung des Hinweises auf die Patenterteilung: **26.03.2008**
(21) Anmeldenummer: 05796052.8
(22) Anmeldetag: 23.09.2005
(51) Int. Cl.: B01D 21/26, G01N 15/04, G01N 15/05, B01L 3/00

(54) **PARTIKELSEDIMENTATIONSVORRICHTUNG UND VERFAHREN ZUM DURCHFÜHREN EINER PARTIKELSEDIMENTATION**
PARTICLE SEDIMENTATION DEVICE AND METHOD FOR CARRYING OUT PARTICLE SEDIMENTATION
DISPOSITIF DE SEDIMENTATION DE PARTICULES ET PROCEDE PERMETTANT DE METTRE EN OEUVRE LA SEDIMENTATION DE PARTICULES

(30) Priorität: 24.09.2004 DE 102004046396
(43) Veröffentlichungstag der Anmeldung: 04.07.2007
(73) Patentinhaber: Albert-Ludwigs-Universität Freiburg, 79085 Freiburg (DE)
(72) Erfinder: DUCREE, Jens, 79112 Freiburg (DE); ZENGERLE, Roland, 79183 Waldkirch (DE); HÄBERLE, Stefan, 89537 Hürben (DE); BRENNER, Thilo, 79108 Freiburg (DE)
(74) Vertreter: Stöckeler, Ferdinand
(86) Internationale Anmeldenummer: PCT/EP2005/010341
(87) Internationale Veröffentlichungsnummer: WO 2006/032529

(56) Entgegenhaltungen:
- EP-A- 0 322 657
- WO-A-00/79285
- GB-A- 191 329 640
- US-A- 4 010 894
- US-A- 4 469 793
- US-A- 4 950 220
- US-A- 5 472 603
- US-A1- 2002 027 133

## Beschreibung

Die vorliegende Erfindung bezieht sich auf ein Verfahren zum Durchführen einer Partikelsedimentation unter Ausnutzung der Zentrifugalkraft.

Die Aufbereitung von Proben ist in der Regel der erste Schritt vieler bioanalytischer Protokolle an realen Proben, wie Blut, Lebensmitteln oder Umweltproben. Dabei wird häufig eine spezielle Spezies von Biomolekülen aus einem Gemisch von anderen Molekülen und Teilchenbestandteilen isoliert und in einen neuen Puffer überführt. Die hier beschriebene Erfindung betrifft die zentrifugale Trennung von Partikeln aus einer Suspension, in der Partikel bzw. Teilchen in einer Flüssigkeit suspendiert sind.

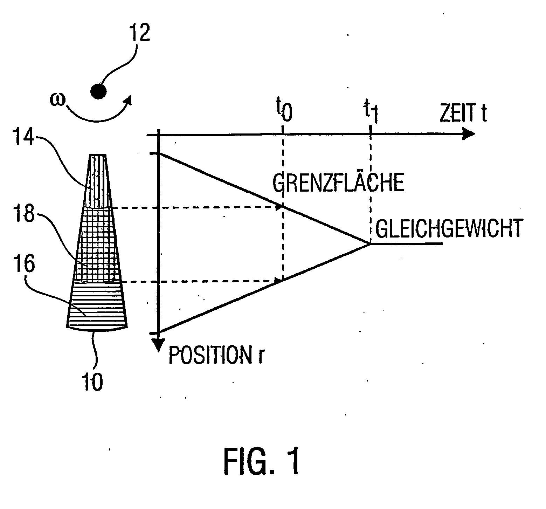

Das Trennen von Partikeln aus Suspensionen mittels Zentrifugen stellt ein etabliertes Standardverfahren in Laboranalysen dar. Partikel in Suspension, etwa der zelluläre Anteil des Bluts, Sedimentieren unter Einfluss des zentrifugalen Schwerefelds gemäß ihrer Dichteverteilung. Die Partikelsuspension, beispielsweise das Blut, wird dabei in ein rotierendes Reservoir 10 (Fig. 1) eingebracht, das um einen Drehmittelpunkt 12 rotierbar ist. Während einer Rotation, beispielsweise mit einer Winkelgeschwindigkeit ω, bildet sich, wie in Fig. 1 gezeigt ist, ein Stapel aus drei Phasen in dem Reservoir 10. Radial innenliegend bildet sich ein partikelfreier Flüssigkeitsüberstand, während sich am radial äußeren Rand eine Phase sedimentierter Partikel 16 aufgrund ihrer gegenüber der Flüssigkeit erhöhte Massedichte bildet. Bei der Sedimentation stellt diese äußere Phase 16 hauptsächlich ein aus Zellen bestehendes Sediment von dichteren, zellulären Blutabestandteilen dar. Zwischen dem partikelfreien Überstand 14 und dem Sediment befindet sich anfänglich noch eine Phase 18, die aus Partikeln in Suspension besteht. Nach einer gewissen Zeit geht die Phase 18 mit ihrem flüssigen Anteil in den partikelfreien Überstand 14 und mit ihrem Teilchenanteil in das Sediment 16 über.

Der vollständige Übergang ist nach einer Zeit t₁ erreicht, wobei zu diesem Zeitpunkt eine Gleichgewichtszustand dahingehend vorliegt, dass Partikel und Lösung, bis auf einige Flüssigkeitsreste in den Räumen zwischen den Sedimentpartikeln, weitestgehend voneinander getrennt sind. Wie in Fig.1 gezeigt ist, laufen die Grenzflächen zwischen partikelfreiem Überstand 14 und Suspension 18 sowie zwischen Suspension 18 und sedimentierten Partikeln 16 aufeinander zu, bis schließlich zum Zeitpunkt t₁ das Gleichgewicht erreicht ist. In Fig. 1 ist die Verteilung in dem Reservoir zu einem Zeitpunkt t₀ gezeigt.

Nach der Sedimentation wird der partikelfreie Flüssigkeitsüberstand vom Niederschlag abgeschüttet oder mittels einer Pipette aus dem Reservoir entnommen.

Miniaturisierte Analysesysteme auf rotierenden Scheiben bieten aufgrund ihres zentrifugalen Antriebs die einfache Möglichkeit, Partikel aus Suspensionen zu sedimentieren. Jedoch ist für eine weiter integrierte Prozessführung in den meisten Fällen die räumliche Trennung beider Phasen voneinander notwendig. Speziell der abschließende Vorgang des Ausschüttens oder Abpipettierens lässt sich auf diesem integrierten Mikrosystem nur schlecht technologisch darstellen, da das makroskopische Verfahren einer Kippung der Kanalachse gegenüber der Richtung der Zentrifugalkraft entsprechen würde. Diese ließe sich aber aufgrund der weiteren Rotationsachse nur mit einem erheblich erhöhten apparativen Aufwand bewerkstelligen.

Wie angesprochen wurde, ist ein wichtiges Ziel bei medizinischen Diagnosesystemen die Integration von vollständigen Prozessketten von der Vorbereitung von Blut bis zu einem analytischen Ergebnis. Verschiedene, sogenannte "Lab-On-A-Chip"-Systeme wurden vorgeschlagen, siehe M. J. Madou und G. J. Kellogg, Proc. Of SPIE, Ausgabe 3259, 1998 S. 80-93; G. Thorsen, G. Ekstrand, U. Selditz, S. R. Wallenborg, und P. Andersson, Proc. Of UTAS 2003, eds. M. A. Northrup, K. F. Jenson, D. J. Harrison, Kluwer Academic, 2003, S. 457-460.

Verschiedene mikrofluidische Strukturen auf zentrifugalen Plattformen sind bekannt. Diese umfassen unter anderem Probenaufbereitung, Flusskontrolle durch kapillare Ventile und weitere fluidische Netzwerke, siehe US 2002/0027133 WO0079285, WO2004058406, W003024598. Ferner sind Systeme zur Auftrennung von Blut in Plasma und Zellen in nicht zentrifugal getriebenen Mikrosystemen bekannt, siehe WO2004074846, WO2004029221.

Die WO2004/061413 A2 befasst sich mit einer mikrofluidischen Vorrichtung, die eine Trennung von Partikeln in einer flüssigen Probe, und insbesondere von Blut in seine Komponenten für eine weitere Analyse ermöglicht. Die Trennung in rote Blutzellen und Plasma findet während weniger Sekunden, nachdem die Blutprobe durch Zentrifugalkraft in eine Trennkammer eingebracht wurde, statt. Ein radial verlaufender Zuführkanal, der an einer radial inneren Wand in die Trennkammer mündet, ist vorgesehen. Der Trennmechanismus hängt hier entscheidend von Oberflächenwechselwirkungen ab.

Aus der DE 3723092 C1 ist eine Durchlaufzentrifuge zur industriellen Produktion von Proteinen aus menschlichem Blutplasma bekannt, bei der in einer Schleudertrommel konzentrisch zueinander angeordnete, im Bodenbereich durch mindestens einen Kanal untereinander verbundene, ringförmige oder ringsegmentförmige Kammern bildende Kunststoffbehälter angeordnet sind, von denen der oder die der Drehachse der Schleudertrommel zugewandt liegende Kunststoffbehälter einen Zulaufstutzen und der oder die im Außenbereich der Schleudertrommel vorgesehene Kunststoffbehälter einen oben liegenden Ablaufkanal aufweisen.

In der US-4,010,894 ist ein Fluidbehälter zur Verwendung in einem Zentrifugensystem zum Trennen der verschiedenen Bestandteile von Blut beschrieben. Der Behälter umfasst zwei kreisförmige Schichten eines flexiblen Materials, die mittige Öffnungen aufweisen. Die äußeren peripheren Kanten und die inneren ringförmigen Abschnitte, die sich um die mittlere Öffnung befinden, sind miteinander verbunden. Konzentrisch angeordnete innere und äußere ringartige Kanäle sind am äußeren peripheren Abschnitt der Anordnung gebildet. Radiale bogenförmige Abschnitte sind miteinander verbunden, wodurch unterbrochene ringförmige Kanäle gebildet sind. An einem ersten Ende des inneren ringartigen Kanals ist eine Einlassröhre vorgesehen, die sich von der mittleren Öffnung nach außen erstreckt und mit dem ersten Ende des inneren ringartigen Kanals kommuniziert. Am Auslass oder zweiten Ende des inneren ringartigen Kanals ist ein sich radial erstreckender Zwischenkanalverbinder vorgesehen, der einen abgedichteten Abschnitt aufweist, der sich zwischen den benachbarten Enden des inneren und äußeren ringartigen Kanals erstreckt. An diesem Auslassende des inneren Kanals ist ferner eine radial vergrößerte Region vorgesehen, die als eine erste Sammelkammer wirkt, in die eine Auslassröhre, die sich von der inneren Öffnung erstreckt, mündet. Eine zweite Auslasskammer ist an dem Auslassende des äußeren ringartigen Kanals vorgesehen.

Die Aufgabe der vorliegenden Erfindung besteht darin, ein Verfahren zum Durchführen einer Partikelsedimentation zu schaffen, das eine vollständige On-Disk-Verarbeitung ermöglichen.

Diese Aufgabe wird durch ein Verfahren zum Durchführen einer Sedimentation einer Partikelsuspension nach Anspruch 1 gelöst.

Eine Partikelsedimentationsvorrichtung zum Durchführen des Verfahrens enthält folgende Merkmale:
einen um eine Rotationsachse rotierbaren Rotationskörper;
eine in dem Rotationskörper gebildete Trennkammer, die ausgebildet ist, um bei einer Rotation des Rotationskörpers eine Sedimentation einer in der Trennkammer befindlichen Partikelsuspension zu bewirken, bei der sich Partikel in einem radial außenliegenden Bereich der Trennkammer sammeln;
einen in dem Rotationskörper gebildeten, eine azimuthale Weglänge aufweisenden, flussratenbestimmenden Zulaufkanal mit einem Zulaufkanaleinlass und einem Zulaufkanalauslass, wobei der Zulaufkanaleinlass radial weiter innen angeordnet ist als der Zulaufkanalauslass, wobei der Zulaufkanalauslass mit der Trennkammer fluidisch verbunden ist und ausgebildet ist, um bei Rotation des Rotationskörpers eine Partikelsuspension in die Trennkammer einzubringen; und
einen in dem Rotationskörper gebildeten Ablaufkanal mit einem Ablaufkanaleinlass und einem Ablaufkanalauslass, wobei der Ablaufkanaleinlass radial weiter innen angeordnet ist als der Ablaufkanalauslass, wobei der Ablaufkanaleinlass mit der Trennkammer fluidisch verbunden ist, wobei der Ablaufkanal ausgebildet ist, um einen Flüssigkeitsüberstand, der durch eine bei einer Rotation des Rotationskörpers bewirkte Sedimentation gebildet wird, durch Zentrifugalkraft zumindest teilweise aus der Trennkammer abzuleiten.

Die vorliegende Erfindung schafft ein Verfahren zum Durchführen einer Sedimentation einer Partikelsuspension, mit den Schritten nach Anspruch 1

Die vorliegende Erfindung schafft daher ein Verfahren, das über eine endliche Zeitspanne, eine kontinuierliche zentrifugale Extraktion von Teilchen aus einer Lösung ermöglicht. Vorzugsweise wird ein definiertes Volumen des Überstands dann zentrifugal aus dem Separationsgefäß, d.h. der Trennkammer, entfernt und dabei vorzugsweise gleichzeitig abgemessen.

Anders ausgedrückt, lehrt die vorliegende Erfindung in den bevorzugten Ausführungsbeispielen die Verwendung ...; eines um ein Drehzentrum rotierendes, mit Komponenten in der Drehebene senkrecht zur Drehachse liegendes fluidisches Netzwerks, das eine Trennkammer mit definierter Volumenkapazität, einen Zulaufkanal und einen Ablaufkanal aufweist. Die Trennkammer ist z.B. seitlich oberhalb ihres Bodens mit einem radial nach außen verlaufenden Zulaufkanal verbunden, der über seine Drehfrequenz und seine radiale Steigung sowie seine Länge und seinen Querschnitt die radial nach innen gerichtete Wandergeschwindigkeit der Gesamtfüllstandshöhe in der Trennkammer bestimmt. Der Ablaufkanal ist z.B. auf der dem Zulaufkanal gegenüberliegenden Seite oberhalb ihres Bodens mit der Trennkammer verbunden und fällt hinter einem radialen Minimum desselben radial ab, wobei aus demselben ein definierter Volumenteil des partikelfreien Überstandes abläuft, beispielsweise in nachgeschaltete Strukturen. Vorzugsweise ist die radiale Wandergeschwindigkeit der Gesamtfüllstandshöhe in Bezug auf die radiale Position und die Geometrie des Ablaufkanals so stark gedrosselt, dass zu keinem Zeitpunkt suspendierte Partikel in den Ablaufkanal gelangen.

Bei bevorzugten Ausführungsbeispielen zum Durchführen des Verfahrens gemäß der vorliegenden Erfindung ist der Einlass des Zulaufkanals mit einer radial weiter innen angeordneten Einrichtung zum Abmessen eines Flüssigkeitsvolumens verbunden, so dass das durch den Ablaufkanal extrahierte partikelfreie Volumen fest durch das Totvolumen der Kanalstruktur (Zulaufkanal, Trennkammer und Ablaufkanal) definiert ist. Beispielsweise kann ein über einen Dispenser definiertes Volumen der Flüssigkeitssuspension dem Zulaufkanaleinlass im Ruhezustand oder während einer Rotation über ein mitrotierendes Zwischenreservoir zugeführt werden.

Der Rotationskörper kann vorzugsweise eine Scheibe sein, in der die Fluidstrukturen gebildet sind. Der Rotationskörper kann ferner einen Deckel zum Verschließen der Fluidstrukturen nach oben aufweisen. Ferner können in einer derartigen Scheibe eine Mehrzahl dieser Fluidstrukturen gebildet sein, so dass eine azimuthale Parallelisierung stattfindet, dahin gehend, dass die Partikelsedimentationsvorrichtung entsprechend der Rotationssymmetrie azimultal repliziert wird und somit eine sequentielle und insbesondere auch parallele Abarbeitung mehrerer Flüssigkeitssuspensionen möglich ist.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung zur Veranschaulichung des Effekts, der einer zentrifugalen Sedimentation zugrundeliegt;
- Fig.2: eine schematische Draufsicht eines Ausführungsbeispiels einer erfindungsgemäßen Fartikelsedimentationsvorrichtung;
- Fig. 3a: bis 3c schematische Darstellungen zur Veranschaulichung des Prozessablaufs bei einem Ausführungsbeispiel einer erfindungsgemäßen Sedimentation;
- Fig. 4: und 5 schematische Draufsichten alternativer Ausführungsbeispiele der vorliegenden Erfindung;
- Fig. 6: eine schematische Draufsicht eines weiteren alternativen Ausführungsbeispiels
- Fig. 7a: und 7b schematische Draufsichten einer Scheibe als Rotationskörper; und
- Fig. 8: eine schematische Seitenansicht eines Rotationskörpers mit Rotationsantrieb.

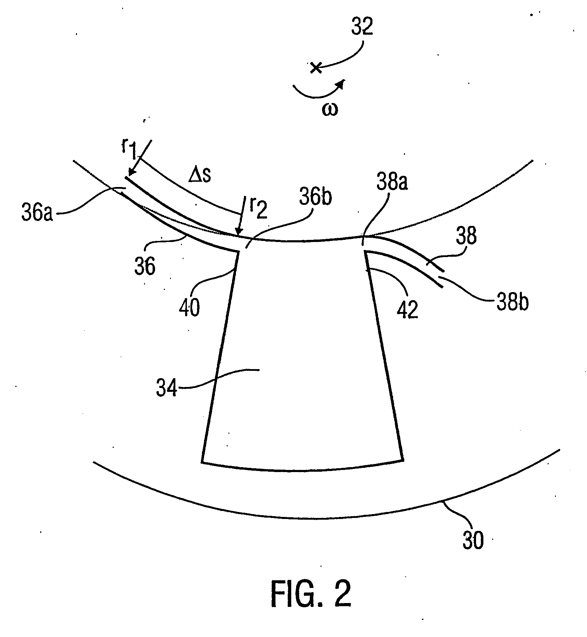

Fig. 2 zeigt eine schematische Draufsicht auf ein Ausführungsbeispiel einer Partikelsedimentationsvorrichtung, anhand dessen nachfolgend das der vorliegenden Erfindung zugrundeliegende Funktionsprinzip erläutert wird.

In Fig. 2 ist schematisch ein Rotationskörper 30 gezeigt, der eine Rotationsachse 32 aufweist. Der Rotationskörper ist vorzugsweise rotationssymmetrisch ausgebildet und ist vorzugsweise durch eine Scheibe gebildet. In der Oberfläche des Rotationskörpers 30 sind Fluidikstrukturen in der Form einer Trennkammer 34, eines Zulaufkanals 36 und eines Ablaufkanals 38 gebildet. Der Zulaufkanal 36 besitzt einen Zulaufkanaleinlass 36a und einen Zulaufkanalauslass 36b, der fluidisch mit der Trennkammer 34 verbunden ist. Der Ablaufkanal 38 besitzt einen Ablaufkanaleinlass 38a, der mit der Trennkammer 34 fluidisch verbunden ist, und einen Ablaufkanalauslass 38b. Der Rotationskörper weist vorzugsweise neben der Scheibe, in der die beschriebenen Fluidikstrukturen gebildet sind, (und darüber hinaus weitere Fluidikstrukturen (in Fig. 2 nicht gezeigt) gebildet sein können, die mit dem Zulaufkanaleinlass 36a und dem Ablaufkanalauslass 38b verbunden sind) einen Deckel zum Abdecken der Fluidikstrukturen auf. Anders ausgedrückt sind die Kanäle außer an den notwendigen Einlässen und Auslässen im wesentlichen geschlossen. Wie in Fig. 2 gezeigt ist, ist bei dem dargestellten Ausführungsbeispiel der Zulaufkanal 36 in einem radial inneren Abschnitt der Trennkammer 34 mit derselben fluidisch verbunden. Ferner ist der Auslasskanal 38 in einem radial in neben Bereich mit der Trennkammer 34 fluidisch verbunden.Ferner ist der Zulaufkanal auf einer ersten Seite 40 mitder Trennkammer verbunden, während der Ablaufkanal 38 aufeiner zweiten Seite mit der Trennkammer 34 verbunden ist. Genauer gesagt ist bei dem dargestellten Ausführungsbeispiel die erste Seite 40 die in Drehrichtung hintere Seite, während die zweite Seite 42 die in Drehrichtung vordere Seite ist.

Der Zulaufkanal 36 ist in radialer Richtung ansteigend, d.h. der Zulaufkanaleinlass 36a ist radial weiter innen angeordnet als der Zulaufkanalauslass 36b. Genauer gesagt ist die innere Wandung des Zulaufkanals im Bereich des Einlasses desselben bei einem Radius r₁ angeordnet, während die innere Wandung des Zulaufkanals 36 am Auslass desselben bei einem Radius r2 angeordnet ist.

Bei einer Rotation des Rotationskörpers 30 um die Rotationsachse 32 mit beispielsweise einer Rotationsgeschwindigkeit ω wird Flüssigkeit, beispielsweise eines Volumens V₀, mittels Zentrifugalkraft über den in radialer, vom Drehzentrum wegweisender r-Richtung ansteigenden Zulaufkanal 36 mit einer Flussrate Φᵢₙ in die Trennkammer 34, die auch als Sedimentationskammer bezeichnet werden kann, geleitet. Die Einflussrate Φᵢₙ ändert sich einerseits mit dem Quadrat der Drehfrequenz w und mit dem radialen "Gefälle", also in Zylinderkoordinaten ausgedrückt, dem radialen Anstieg Δr>0 pro azimuthaler Weglänge Δs>0 in Flussrichtung. Veranschaulicht man das Zentrifugalfeld als Schwerefeld der Erde, so entsteht eine Wassersäule mit der Dichte p mit dem Äquivalentdruck pgΔr, wobei die Beschleunigungskonstante bei der Zentrifugation durch ω²r gegeben ist. Andererseits ändert sich die Einflussrate Φᵢₙ mit dem reziproken Flusswiderstand Rᵢₙ des Einlasskanals, der insbesondere von der Querschnittsfläche und Länge des Einlasskanals abhängt. Somit steigt in der Trennkammer 34 der Flüssigkeitspegel mit einer Geschwindigkeit u_{dec}(t) = Δr(t)/Δt = - Φᵢₙ/A<0 (d.h. in Richtung zu der Rotationsachse, also dem Rotationsmittelpunkt hin), entsprechend Φᵢₙ und der Querschnittsfläche A der Trennkammer 34 an.

Während der Rotation sinkt die Grenzfläche zwischen dem partikelfreien Überstand und dem Sediment bzw. dem Teil des Volumens, das Partikel aufweist, also im Nicht-Gleichgewichtszustand Suspension und Sediment, mit einer entgegenlaufenden Relativgeschwindigkeit u_{drift}. Die Geschwindigkeit u_{drift} bezeichnet hier die Geschwindigkeit, welche bei unterbrochenem Zustrom Φᵢₙ = 0 beobachtet werden würde. Diese Relativgeschwindigkeit u_{drift} ist von der absoluten Steiggeschwindigkeit dieser Grenzschicht u_{abs} zu unterscheiden. In u_{abs} geht die Differenz zwischen u_{dec} und u_{drift} ein. Auch u_{drift} ist wie Φᵢₙ proportional zum Quadrat der Drehfrequenz ω, so dass bei einer gegebenen Geometrie das Verhältnis von u_{drift} zu Φᵢₙ unabhängig von der Drehzahl ω ist. Die Form der Grenzfläche richtet sich außer nach u_{drift} auf der Einlassseite auch nach dem räumlichen und zeitlichen Verlauf des Zustroms während des Zentrifugationsprozesses.

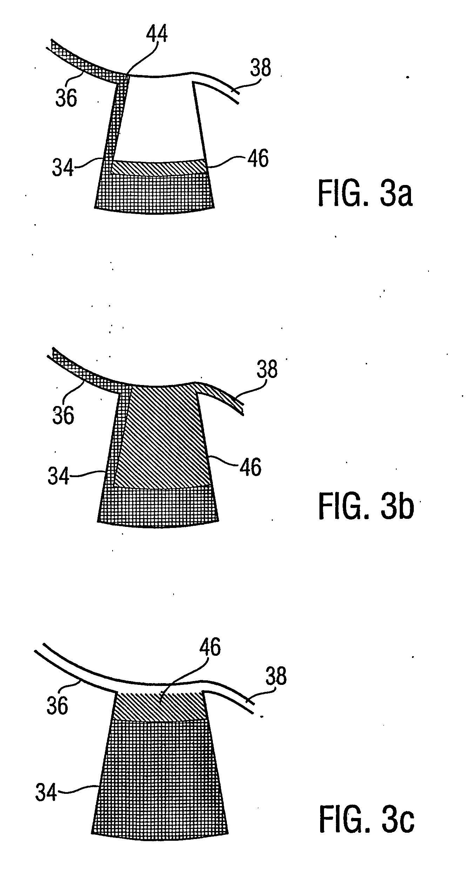

Fig. 3a zeigt schematisch, wie in einem ersten Schritt über den Zulaufkanal 36 eine Flüssigkeitssuspension, beispielsweise Blut, 44 zugeführt wird. In der Trennkammer 34 findet eine Sedimentation, wie sie oben Bezug nehmend auf Fig. 1 beschrieben wurde, statt, wobei in den Figuren 3a bis 3c der Einfachheit halber lediglich der partikelfreie Flüssigkeitsüberstand 46 (beispielsweise das Blutplasma) separat von der anderen gezeigten Phase, welche die partikelbehafteten Phasen der Suspension und des Sediments zusammenfasst, dargestellt. Durch die Zentrifugalkraft wird der Zustrom entlang der dem Ablauf gegenüberliegenden Wand der Trennkammer gezwungen, so dass ein direkter Fluss des noch nicht (vollständig) sedimentierten Einlassstroms in den Auslass verhindert wird.

In Fig. 3b ist der Zustand gezeigt, bei dem über den Zulaufkanal 36 noch Suspension in die Trennkammer eingebracht wird, während über den Ablaufkanal 38 partikelfreier Flüssigkeitsüberstand 46 aus der Trennkammer entfernt wird. In der Trennkammer findet dabei weiterhin eine Sedimentation, wie sie oben Bezug nehmend auf Fig. 1 beschrieben wurde, statt.

In Fig. 3c ist schließlich der Endzustand dargestellt, nachdem ein vorbestimmtes Suspensionsvolumen durch die Sedimentationsvorrichtung sedimentiert wurde. Dabei reißt der durch den Ablaufkanal 38 abgeleitete Fluss des partikelfreien Flüssigkeitsüberstands ab, wenn über den Zulaufkanal 36 keine Suspension mehr zugeführt wird und der Ablaufkanaleinlass in Kommunikation mit einem Umgebungsgas, das beispielsweise über den Zulaufkanal 36 eindringt, (beispielsweise Luft bei Atmosphärendruck) gelangt.

Die Anordnung des Ablaufkanals 38 bezüglich der Trennkammer 34 bestimmt somit auf entscheidende Weise das Totvolumen Vₜₒₜ der Kanalstruktur, d.h. das Medienvolumen, welches nach der Zentrifugation im System zurückbleibt. Der radial äußere Punkt der Einmündung des Ablaufkanals 38 in die Trennkammer 34, der als rₘᵢₙ bezeichnet werden kann, bestimmt die Füllstandshöhe der Trennkammer 34 nach der Zentrifugation und somit das Totvolumen Vₜₒₜ derselben.

Bei bekanntem Volumen der Suspension, die über den Zulaufkanal 36 zugeführt wird, und bekanntem Totvolumen kann somit ein definiertes, bekanntes Volumen des partikelfreien Flüssigkeitsüberstands über den Ablaufkanal 38 ausgegeben werden. Der Ablaufkanal steigt vorzugsweise zumindest ab einem bestimmten Punkt, typischerweise aber auf seiner ganzen Strecke radial an, um sich über die Zentrifugation vollständig entleeren zu können.

Zusammenfassend wird bei einem ersten Schritt dem Einlasskanal ein Flüssigkeitsvolumen V₀ zugeführt und in Rotation versetzt. Die daraus resultierte Zentrifugalkraft wirkt dabei wie ein künstliches Gravitationsfeld, welches einerseits den Fluss aufgrund des radialen Gradienten Δr/Δs>0 des Zulaufkanals wie an einer schiefen Ebene den Einlasskanal "herunter" (zu ansteigendem r) in die Trennkammer treibt. Während der Rotation unterliegt die eingebrachte Teilchensuspension einer kontinuierlichen zentrifugalen Auftrennung, so dass sich in der Trennkammer eine mit der Zeit radial ansteigende Phasengrenzfläche ausbildet. Durch den entsprechenden Verlauf des Ablaufkanals wird dann der partikelfreie Flüssigkeitsüberstand über den Ablaufkanal 38 abgeleitet.

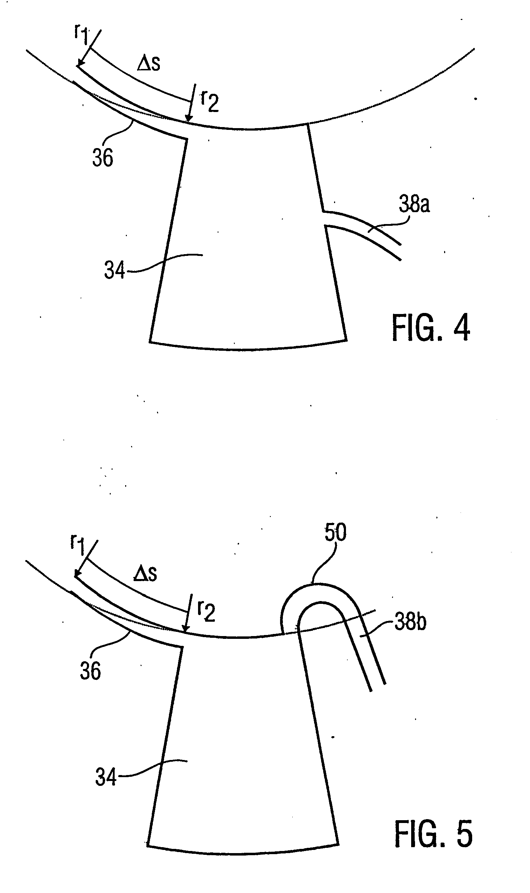

Alternative Ausführungsbeispiele für eine geometrische Anordnung des Ablaufkanals sind in den Figuren 4 und 5 gezeigt. Gemäß Fig. 4 ist der Ablaufkanal 38a in einem radial inneren Bereich der Trennkammer 34 mit derselben fluidisch verbunden, jedoch nicht an der radialen Innenseite derselben.

Bei dem in Fig. 5 gezeigten Ausführungsbeispiel erstreckt sich ein Ablaufkanal 38b zunächst von einer radial inneren Seite der Trennkammer 34 radial nach innen, bevor derselbe nach einem radialen Minimum 50 sich radial nach außen erstreckt.

Bei den in den Figuren 2 und 4 gezeigten Ausführungsbeispielen gibt für den Fall, dass der Ablaufkanaleinlass für ein Umgebungsgas, beispielsweise Luft bei Atmosphärendruck, zugänglich ist, das radiale Minimum der Unterkante des jeweiligen Ablaufkanals 38 bzw. 38a im wesentlichen die Füllstandshöhe nach der Zentrifugation vor. Bei dem in Fig. 5 gezeigten Beispiel saugt der zentrifugal getriebene Fluss am Ablaufkanal 38b so lange an der Trennkammer 34, wie der Füllstand im Ablaufkanal radial weiter außen als der Füllstand der Trennkammer liegt und wie kein Umgebungsgas an den Fluss im Auslassbereich gelangen kann. Dieses Absaugen kann die durch den Ablaufkanal 38b abgeleitete Flüssigkeitsmenge wesentlich beeinflussen. Da jedoch dieses Absaugen reproduzierbar erfolgen kann, kann bei gleichbleibenden Verhältnissen noch ein definiertes Volumen an partikelfreiem Flüssigkeitsüberstand abgeleitet werden.

Alternativ könnte in dem Bereich, in dem der Ablaufkanal 38b in die Trennkammer 34 mündet, ein Zugang zum Umgebungsgas vorgesehen sein, so dass ein Saugen aus der Trennkammer, wie es oben beschrieben ist, nach Beendigung einer Suspensionszuführung nicht stattfindet. Zu diesem Zweck könnte beispielsweise ein hydrophobes Loch im Deckel des Rotationskörpers im Bereich der Einmündung des Ablaufkanals in die Trennkammer vorgesehen sein. Dies ermöglicht es, dass der Fluss aus der Trennkammer einen zeitlich durchgehenden fluidischen Zugang zum Umgebungsgas hat, um einen geometrisch definierten Volumenabriss zu erzielen.

Die vorliegende Erfindung eignet sich bei bevorzugten Ausführungsbeispielen derselben insbesondere zur Implementierung von Sedimentations verfahren, bei denen sichergestellt werden kann, dass der Flüssigkeitsüberstand im Wesentlichen partikelfrei ist. Für das Funktionsprinzip derartiger Ausführungsbeispiele ist es notwendig, dass das Totvolumen Vₜₒₜ der Struktur das Volumen des zentrifugierten Sediments V_{sed} übersteigt. Zum anderen muss bei solchen Ausführungsbeispielen die Wandergeschwindigkeit des Gesamtflüssigkeitspegels U_{dec} in der Sedimentationskammer gegenüber der absoluten radialen Wandergeschwindigkeit dieser Grenzschicht u_{abs} (auf der Auslassseite) so gering ausfallen, dass zu keinem Zeitpunkt Teilchen in den Teil des Ablaufkanals außerhalb des Totvolumens gelangen können. Anders ausgedrückt soll, zumindest für den Fall eines Gaszugangs zum Auslaufbereich, zu keinem Zeitpunkt t die Höhe r_{abs} der Grenzfläche (zwischen Flüssigkeitsüberstand und partikelbehafteter Phase) radial weiter innen als rₘᵢₙ liegt. Zu diesem Zweck kann u_{dec} beispielsweise über den hydrodynamischen Widerstand Rᵢₙ des Zulaufkanals, also seine Länge und seine Querschnittsfläche sowie seine Steigung Δr/Δs und den Querschnitt A der Trennkammer gedrosselt werden.

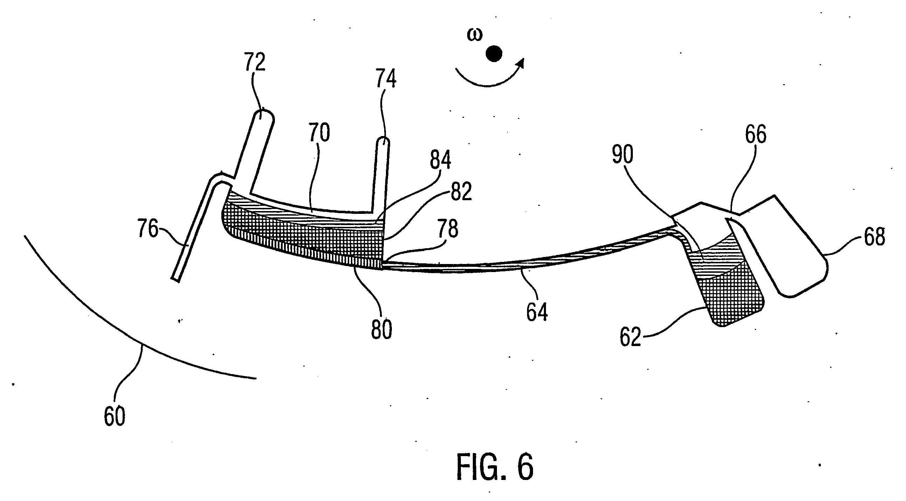

Ein Ausführungsbeispiel einer Sedimentationsvorrichtung zum Durchführen des erfindungsgemäßen Verfahrens deren Zulaufkanal und Ablaufkanal mit weiteren fluidischen Strukturen verbunden sind, ist in Fig. 6 gezeigt. Die in Fig. 6 gezeigten Fluidstrukturen sind wiederum in einem Rotationskörper 60 angeordnet. In dem Rotationskörper 60 ist wiederum eine Trennkammer 62, ein Zulaufkanal 64 und ein Ablaufkanal 66 gebildet. Der Auslass des Ablaufkanals 66 ist mit einer Fluidkammer, beispielsweise einer Messkammer 68 fluidisch verbunden. Der Einlass des Zulaufkanals 64 ist mit einer Dosierkammer 70 fluidisch verbunden. Die Dosierkammer weist einen Einlass 72, eine Entlüftung 74 und eine Überlauf 76 auf. Ferner ist der Auslass der Dosierkammer 70 zu dem Zulaufkanal 64 als hydrophobisierter Auslass 78 ausgebildet. Über den Einlass 72 kann eine Suspension, beispielsweise Blut, in die Dosierkammer 70 eingebracht werden. Über die Entlüftung 74,die radial nach innen zeigt, können Luftblasen entweichen. Das Volumen der in die Dosierkammer eingebrachten Suspension ist definiert durch den hydrophobisierten Auslass 78 und die radiale Position und den Verlauf des Überlaufkanals 76. Die Entlüftung 74 ermöglicht eine optimale, d.h. volumendefinierte Befüllung. Blut kann beispielsweise bei einer Drehfrequenz ω von 10 Hz mit einem Volumen von 5 µl in die Dosierkammer eingebracht werden.

Nachdem das gewünschte Volumen in die Dosierkammer 70 eingebracht ist, gibt die Dosierkammer 70 nach dem Überschreiten einer geometrisch definierten Drehzahlschwelle das über die Kammergeometrie und die Höhe und dem Verlauf des Überlaufs definierte Volumen V₀ in den Zulaufkanal 64 ab. Hierbei kann beispielsweise eine Drehfrequenz von ω = 40 Hz verwendet werden. Wie in Fig. 6 angedeutet ist, ergibt sich dabei bereits in der Kammer 70 eine Sedimentation mit den resultierenden Phasen aus Sediment 80, Suspension 82 und Flüssigkeitsüberstand 84. An dieser Stelle sei jedoch angemerkt, dass diese Phasen allesamt als Suspension über den Zulaufkanal 64 in die Trennkammer 62 zugeführt werden, wobei insbesondere das Sediment 80 nicht derart verdichtet wird, dass es nicht mehr durch den Zulaufkanal 64 zugeführt werden könnte.

Die über den Zulaufkanal 64 zugeführte Suspension gelangt in die Trennkammer 62, wo ein Anstieg des dortigen Flüssigkeitsvolumens erfolgt und im Rahmen der stattfindenden Sedimentation ein partikelfreier Flüssigkeitsüberstand 90 erzeugt wird. Bei weiterem Ansteigen des Flüssigkeitspegels läuft der Flüssigkeitsüberstand, beispielsweise das gereinigte Blutplasma, über den Ablaufkanal 66 in die Messkammer 68, während das Sediment am Boden der Trennkammer 62 zurückgehalten wird.

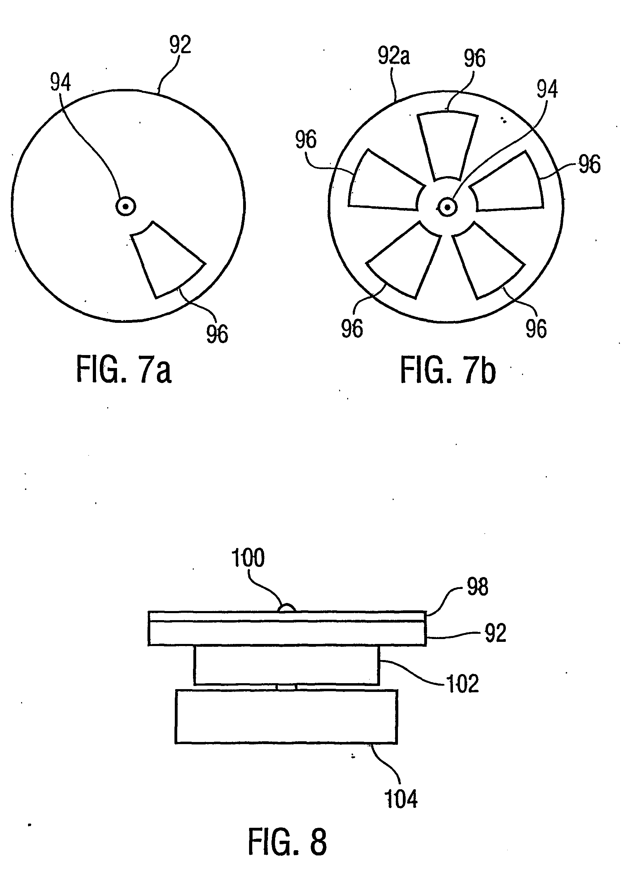

In Fig. 7a ist schematisch ein Rotationskörper eines Ausführungsbeispiels einer Partikelsedimentationsvorrichtung zum Durchführen des erfindungsgemäßen Verfahrens als Scheibe 92 dargestellt. Die Scheibe kann nach Art einer herkömmlichen CD aufgebaut sein, mit einer mittleren Öffnung 94, mittels derer sie beispielsweise an einer herkömmlichen Zentrifuge angebracht werden kann. Rein schematisch sind in Fig. 7a die Fluidstrukturen einer erfindungsgemäßen Partikelsedimentationsvorrichtung gezeigt, wobei die Fluidstrukturen 96 beispielsweise die in Fig. 6 gezeigten umfassen können.

In Fig. 7b ist ein Ausführungsbeispiel gezeigt, bei dem eine Mehrzahl von Fluidikstrukturen 96 in einer Rotationsscheibe 92a gebildet sind, um eine Parallelisierung zu erreichen.

Schließlich zeigt Fig. 8 ein Ausführungsbeispiel einer Partikelsedimentationsvorrichtung, die einen Rotationskörper aufweist, der eine Scheibe 92 und einen Deckel 98 umfasst. Der Rotationskörper ist über eine Befestigungseinrichtung 100 an einem rotierenden Teil 102 einer Antriebsvorrichtung angebracht, das drehbar an einem stationären Teil 104 der Antriebsvorrichtung gelagert ist. Bei der Antriebsvorrichtung kann es sich beispielsweise um eine herkömmliche Zentrifuge mit einstellbarer Drehgeschwindigkeit handeln.

Statt der oben, Bezug nehmend auf Fig. 6 beschriebenen Dosierkammer, können beliebige Dosiervorrichtung bzw. Dispenser verwendet werden, die geeignet sind, um ein definiertes Suspensionsvolumen in den Zulaufkanaleinlass einzubringen. Der Rotationskörper der erfindungsgemäßen Partikelsedimentationsvorrichtung kann aus beliebigem geeignetem Materialien, beispielsweise Kunststoff, Silizium, Metall oder dergleichen bestehen und kann durch beliebige geeignete Herstellungsverfahren erzeugt werden, beispielsweise Mikrostrukturierung oder Spritzgusstechniken.

Die vorliegende Erfindung liefert ein neuartiges auf Zentrifugalkraft basierendes Verfahren für eine kontinuierliche (zeitlich befristete) Extraktion eines partikelfreien Flüssigkeitsüberstands von einem Sediment, das vorteilhaft in einer dreistufigen mikrofluidischen Struktur implementiert werden kann, wobei die kontinuierliche Extraktion mit dem dosierten Partikelfreien Flüssigkeitsüberstand, der ohne weiteres für eine nachfolgende On-Disk-Verarbeitung verfügbar ist, endet. Beispielsweise hat sich gezeigt, dass die vorliegende Erfindung vorteilhaft einsetzbar ist, um Blutplasma vom Zellsediment zu separieren, wobei beispielsweise 2µl Plasma von 5µl Blut bei geringen Drehfrequenzen von bis zu 40 Hz in nur 20 Sekunden separiert werden können. Es hat sich gezeigt; dass die Restzellkonzentration in dem gereinigten Plasma weitgehend unabhängig von der Rotationsfrequenz unterhalb eines Prozents gehalten werden kann.

Wie oben ausgeführt wurde, kann das Ableiten eines im Wesentlichen partikelfreien Flüssigkeitsüberstands erreicht werden, wenn das Totvolumen der Trennkammer etwas größer ist als das Volumen der Zellen, d.h. des Sediments. Auf diese Weise fließt nur gereinigtes Plasma über den Ablaufkanal ab, beispielsweise in ein nachfolgendes Reservoir, in dem es für eine weitere Verarbeitung verfügbar ist. Darüber hinaus kann ein im Wesentlichen partikelfreier Flüssigkeitsüberstand dann erhalten werden, wenn der Flusswiderstand des Zulaufkanals und die Geometrie der Trennkammer eingestellt sind, um die Anstiegsgeschwindigkeit des Füllpegels, u_{dec}, wesentlich kleiner zu machen als die gegenläufige Geschwindigkeit u_{drift} und so dass, im Falle eines möglichen Gaszugangs zum Einlass des Ablaufkanals, durch die Wandergeschwindigkeit U_{abs} sichergestellt ist, dass die radial äußere Grenze des Flüssigkeitsüberstands radial nicht weiter innen zu liegen kommt als die radial äußere Grenze (rₘᵢₙ) des Ablaufkanaleinlasses. Da sich sowohl u_{dec} als auch u_{drift} mit dem Quadrat der Drehfrequenz ω ändern, hängt die Effizienz der Trennung nicht von der Drehfrequenz ab. Darüber hinaus ist die Trennzeit tₛₑₚ bei diesem Zentrifugationsschema durch den Flusswiderstand des Zulaufkanals gesteuert.

## Patentansprüche

1. Verfahren zum Durchführen einer Sedimentation einer Partikelsuspension unter Verwendung mikrofluidischer Strukturen, die einen eine azimuthale Weglänge (Δs) aufweisenden, flussratenbestimmenden Zulaufkanal (36;64), wobei ein Zulaufkanaleinlass (36a) radial weiter innen angeordnet ist als ein Zulaufkanalauslass (36b), sowie eine Trennkammer (34; 62) mit einem Partikelsammelbereich und einen Ablaufkanal (38; 66) aufweisen, die in einem Rotationskörper (30; 60; 92; 92a) gebildet sind, wobei ein eine azimuthale Weglänge aufweisender Abschnitt des Zulaufkanals (36; 64) in die Trennkammer (34; 62) mündet, mit folgenden Schritten:
Beaufschlagen des Rotationskörpers mit einer Rotation bei der gegebenen Rotationsfrequenz, um
ein definiertes Partikelsuspensionsvolumen durch Zentrifugalkraft durch den Zulaufkanal (36; 64) an einer bezüglich des Partikelsammelbereichs radial inneren Position in die Trennkammer (34; 62) zuzuführen;
die Partikelsuspension in der Trennkammer (34; 62) zu sedimentieren, so dass sich Partikel aufgrund ihrer, verglichen mit einer Flüssigkeit in der Partikelsuspensionhöheren Massedichte in einem radial außenliegenden Partikelsammelbereich der Trennkammer (34; 62) sammeln; und
zumindest teilweises Ableiten eines sich durch die Sedimentation ergebenden Flüssigkeitsüberstands durch Zentrifugalkraft durch einen mit der Trennkammer (34; 62) fluidisch verbundenen Ablaufkanal (38; 66),
wobei der Zulaufkanal (36; 64) eine solche radiale Steigung, eine solche Länge und einen solchen Querschnitt aufweist, dass bei der gegebenen Rotationsfrequenz und; dem definierten Partikelsuspensionsvolumen die Flussrate der Partikelsuspension in die Trennkammer so gering ist, dass ein Zustrom einer partikelbehafteten Phase in der Trennkammer entlang einer von einem Ablaufkanaleinlass beabstandeten Wand gezwungen wird, so dass eine sich in der Trennkammer (34; 62) bildende Grenzfläche zwischen einem Flüssigkeitsüberstand und einer partikelbehafteten Phase radial außerhalb eines Ablaufkanaleinlasses (38a), an dem der Ablaufkanal mit der Trennkammer (34; 62) fluidisch verbunden ist, bleibt.

2. Verfahren nach Anspruch 1, das ferner ein Dosieren des bekannten gegebenen Volumens durch eine Dosierkammer aufweist.

3. Verfahren nach Anspruch 1 oder 2, das einen Schritt des Belassens eines Totvolumens in der Trennkammer aufweist, so dass beim Schritt des Ableitens ein definiertes vorbestimmtes Volumen des Flüssigkeitsüberstands abgeleitet wird.

## Claims

1. A method of performing a sedimentation of a particle suspension using microfluidic structures comprising an inflow channel (36; 64) determining the flow rate and having an azimuthal path length (Δs), an inflow channel inlet (36a) being arranged radially further inwards than an inflow channel outlet (36b), as well as a separating chamber (34; 62) having a particle collective region and a drainage channel (38; 66), which are formed in a solid of revolution (30; 60; 92; 92a), wherein a portion of the inflow channel (36; 64) having an azimuthal path length leads into the separating chamber (34; 62), comprising:
imparting the solid of revolution with a rotation at the given rotational frequency so as to
feed a defined particle suspension volume into the separating chamber (34; 62) through the inflow channel (36; 64) by means of centrifugal force at a position radially inwards relative to the particle collective region;
sediment the particle suspension in the separating chamber (34; 62) so that the particles collect, due to their mass density being higher than that of a liquid in the particle suspension, in a particle collective region of the separating chamber (34; 62) positioned radially outwards; and
at least partially drawing off, by means of centrifugal force, a liquid supernatant resulting from the sedimentation through a drainage channel (38; 66) fluidically connected to the separating chamber (34; 62),
wherein the inflow channel (36; 64) exhibits such a radial gradient, such a length and such a cross-section that, with the given rotational frequency and the defined particle suspension volume, the flow rate of the particle suspension into the separating chamber is so low that an influx of a particle-contaminated phase in the separating chamber is forced along a wall spaced away from a drainage channel inlet so that an interface between a liquid supernatant and a particle-contaminated phase forming within the separating chamber (34; 62) remains radially outside a drainage channel inlet (38a) at which the drainage channel is fluidically connected to the separating chamber (34; 62).

2. The method according to claim 1, further comprising dosing the known given volume by means of a dosing chamber.

3. The method according to claims 1 or 2, comprising a step of leaving a dead volume in the separating chamber so that, in the step of the drawing off, a defined predetermined volume of the liquid supernatant is drawn off.

## Revendications

1. Procédé permettant de mettre en oeuvre une sédimentation d'une suspension de particules à l'aide de structures microfluidiques présentant un canal d'alimentation (36; 64) déterminant le débit et présentant une longueur de trajet (Δs) azimutale, une entrée de canal d'alimentation (36a) étant disposée radialement plus à l'intérieur qu'une sortie de canal d'alimentation (36b), ainsi qu'une chambre de séparation (34; 62) avec une zone de collection de particules et un canal de décharge (38; 66) formés dans un corps rotatif (30; 60; 92; 92a), un segment du canal d'alimentation (36; 64) présentant une longueur de trajet azimutale débouchant dans la chambre de séparation (34; 62), aux étapes suivantes consistant à:
soumettre le corps rotatif à une rotation à la fréquence de rotation donnée, pour
alimenter un volume de suspension de particules défini par force centrifuge, à travers le canal d'alimentation (36; 64), vers une position radialement vers l'intérieur par rapport à la zone de collection de particules dans la chambre de séparation (34; 62);
sédimenter la suspension de particules dans la chambre de séparation (34; 62), de sorte que des particules s'accumulent, par suite de leur densité de masse supérieure comparé à un liquide dans la suspension de particules, dans une zone de collection de particules située radialement à l'extérieur de la chambre de séparation (34; 62); et
décharger au moins partiellement un surnageant de liquide résultant de la sédimentation par force centrifuge à travers un canal de décharge (38; 66) relié en fluide à la chambre de séparation (34; 62),
le canal d'alimentation (36; 64) présentant une pente ascendante radiale, une longueur et une section telles que, à la fréquence de rotation donnée et au volume de suspension de particules défini, le débit de la suspension de particules dans la chambre de séparation soit si faible que soit forcée une alimentation d'une phase chargée de particules dans la chambre de séparation le long d'une paroi distante d'une entrée de canal de décharge, de sorte qu'une interface se formant dans la chambre de séparation (34; 62) entre un surnageant de liquide et une phase chargée de particules reste radialement à l'extérieur d'une entrée de canal de décharge (38a) à laquelle le canal de décharge est relié en fluide à la chambre de séparation (34; 62).

2. Procédé selon la revendication 1, présentant par exemple un dosage du volume donné connu à travers une chambre de dosage.

3. Procédé selon la revendication 1 ou 2, présentant une étape consistant à laisser un volume mort dans la chambre de séparation, de sorte que lors de l'étape de décharge soit déchargé un volume prédéterminé défini du surnageant de liquide.
